# EUROPEAN PATENT APPLICATION

(11) **EP 4 737 909 A1**
(43) Date of publication of application: **06.05.2026**
(21) Application number: 24210948.6
(22) Date of filing: 05.11.2024
(51) Int. Cl.: G01N 35/10, G01F 11/02, G01F 23/00, G01F 23/292, G01N 21/03, G01N 21/11

(54) **FLUID MEASURING SYSTEM**

(71) Applicant: ABB SCHWEIZ AG, 5400 Baden (CH)
(72) Inventor: DOE, William, Bristol, BS3 5BJ (GB); REDFERN, Adam, Gloucester, GL2 8NE (GB); LOVELESS, Edis, Bristol, BS5 0HP (GB)
(74) Representative: Maiwald GmbH

(57) **Abstract**

The present invention relates to a fluid measuring system (1), comprising a fluid measuring chamber (3) for receiving a fluid to be measured, a measurement arrangement (5) for measuring the received fluid, a plunger (7) being at least partially arranged in the fluid measuring chamber (3), wherein the plunger (7) comprises an internal fluid path (9) extending therethrough, wherein the internal fluid path (9) is adapted to provide a fluid connection between an inside (11) of the fluid measuring chamber (3) and an outside (13) of the fluid measuring chamber (3).

## Description

### 1. FIELD OF THE INVENTION

The invention relates to a fluid measuring system, and a method for measuring a fluid by the fluid measuring system.

### 2. BACKGROUND

Measuring systems such as chemical or optical detection systems for fluids often demand a precise preparation of the fluid to be measured in a sequence of multiple measurements. It is for instance often required that a sample fluid to be measured is repeatedly mixed and measured with one or more different reagents to determine different properties and characteristics of the sample fluid. This may be done for instance in batch measurements, wherein a sample fluid is mixed with a reagent in given certain volume, and the mixture is subsequently measured during or after the mixing. After the measurement the sample must be discharged from the volume to allow a subsequent measurement. As of now, a precise preparation of the fluid in the measuring system and exchange of the fluid is often cumbersome and existing systems are accordingly complex and limited in the throughput of fluids that could be measured at a given time. Furthermore, a proper discharge of unwanted components of the fluids, such as accumulated gases, may not be possible.

Thus, there exists a need for an improved fluid measuring system and respective methods for employment.

### 3. SUMMARY OF THE INVENTION

The object is achieved by the present invention according to the independent claims. Preferred embodiments of the invention are provided in the dependent claims, the description, and the accompanying figures.

The present invention relates to a fluid measuring system, comprising a fluid measuring chamber for receiving a fluid to be measured, a measurement arrangement for measuring the received fluid, a plunger being at least partially arranged in the fluid measuring chamber, wherein the plunger comprises an internal fluid path extending therethrough, wherein the internal fluid path is adapted to provide a fluid connection between an inside of the fluid measuring chamber and an outside of the fluid measuring chamber.

Thus, an improved system may be provided, which may allow to supply a fluid to the fluid measuring chamber or to discharge of a fluid to an outside of the fluid measuring chamber via the internal fluid path. Thus, a precise adjustment of the fluid volume and an easy exchange of fluid may be achieved.

The fluid measuring system may include any system that may allow to investigate properties of a fluid, e.g. via physical and/or chemical measurements. This may include for instance opto-chemical analysis, such as colorimeters, titrators and/or fluorometers etc.

It will be appreciated, that also more than one fluid measuring chamber or cell may be provided in the fluid measuring system. The fluid measuring chamber may be suitably dimensioned to receive and hold a certain volume of the fluid to be measured. The fluid measuring chamber may be formed in any desired shape, which may include but is not delimited to a quadrangular or cylindrical shape. The fluid to be measured may include one or more liquids, or one or more gases, or corresponding mixtures thereof and may be for instance a sample or analyte to be investigated, e.g. a water sample. The fluid to be measured may also contain reagents that were added to the sample to induce a desired reaction with the sample, e.g. a color change etc. which could be accordingly measured.

The measurement arrangement may comprise suitable means for detecting physical or chemical properties of the fluid to be measured, such as different containments, pH etc. The measurement arrangement may accordingly include respective emitters and detectors, which may be arranged in the vicinity fluid measuring chamber to emit and detect, respectively, for instance radiation, e.g. light, passing through the measuring chamber and the fluid to be measured contained therein. The fluid measuring chamber may accordingly include or be made of respective suitable materials that may allow a transmission of radiation through the fluid measuring chamber. For instance, if the measurement arrangement is based on visible light transmission, the fluid measuring chamber may be made of a correspondingly optically transparent material, such as glass or acrylic. However, the present invention is not delimited thereto, and also other suitable measurement arrangements, which may allow a measuring of the fluid based on other detection principles, may be provided.

The shape of the plunger may be suitably adapted to the inner shape of the fluid measuring chamber. The plunger may be fully inserted or only partially inserted in the fluid measuring chamber with a distal end. For instance, if the fluid measuring chamber is cylindrically formed, the plunger may be likewise cylindrically formed to snugly fit into the fluid measuring chamber. The plunger may be accordingly adapted to seal a volume in the fluid measuring chamber, in which the fluid to be measured may be received and retained. For instance, the plunger may have a diameter of 1 mm to 50 mm, preferably of 5 mm to 25 mm, more preferably of 7 mm to 15 mm, for instance of about 10 mm. The inner volume of the fluid measuring chamber may be accordingly shaped and accordingly have a diameter of 1 mm to 50 mm, preferably of 5 mm to 25 mm, more preferably of 7 mm to 15 mm, for instance of about 10 mm. The inside of the fluid measuring chamber may define an internal volume defined by respective surface or wall elements of the fluid measuring chamber. Accordingly, the outside of the fluid measuring chamber may be understood as the space or area defined outside the respective surface or wall elements, e.g. the environment of the of the fluid measuring chamber.

As will be appreciated, the internal fluid path may comprise one or more channels extending through the plunger. The fluid connection may accordingly allow a discharge of fluid from the fluid measuring chamber through the plunger. For instance, the plunger may be inserted from a top side of the fluid measuring chamber, and the internal fluid path may extend from a bottom side of the plunger to a top side of the plunger. Hence, fluid arranged at the top side of the fluid measuring chamber may be allowed to flow through the plunger towards the top side of the plunger and may be accordingly discharged at the top side of the plunger.

For instance, the fluid to be measured may contain gas, e.g. air, which may accumulate at the top side of the fluid measuring chamber. In this case, the gas could be readily discharged from the fluid measuring chamber. Accordingly, a partial or even full removal of the gas from the fluid measuring chamber may be achieved. Hence, compressible elements of the fluid contained in the fluid measuring chamber may be suitably removed. This may accordingly enhance the setting of a desired pressure in the fluid measuring chamber. However, the present invention is not delimited thereto, and also different configurations for achieving a fluid connection between an inside and an outside of the fluid measuring chamber via the internal fluid path extending through the plunger are of course conceivable.

The provision of the internal fluid path may also allow to flush the fluid measuring chamber after a measurement, for instance with a cleaning fluid, to restore a predefined condition of the fluid measuring chamber before the next measurement. In one example, the plunger may not be required to be moved for supplying or discharging a liquid from the measuring chamber. Thus, an undesired wear of the plunger and associated parts, such as seals etc. may be suitably reduced. Hence, for instance a wear-less flushing of the measuring chamber may be enabled.

The fluid measuring system may also comprise a collar, arranged at a top side of the fluid measuring chamber, which is adapted to hold and guide the plunger. Furthermore, a stir element may be provided at the bottom side of the fluid measuring chamber, which may be driven to enable a stirring or mixing of the fluid contained in the fluid measuring chamber. In other configurations, a stirring may be additionally or alternatively achieved by aspirating a gas, which may accordingly move through the fluid measuring chamber from the fluid supply to the fluid discharge. For instance, air may be supplied, e.g. continuously, to the fluid measuring chamber for mixing the fluid to be measured on one (e.g. bottom) side of the fluid measuring chamber. And after the air has moved through the fluid measuring chamber, it may accordingly be discharged, e.g. continuously, at the opposite (e.g. top) side of the fluid measuring chamber. As this gas movement may already enable a proper mixing, additional mixing elements may not be needed. Nevertheless, of course also a combination of a separate mixing element and a gas flow may be provided for mixing.

The fluid measuring system may further comprise a temperature control element, which may include for instance a heating element and/or a cooling element for controlling of the temperature of the fluid to be measured. The fluid measuring system may comprise respective one or more temperature sensors for measuring a temperature of the fluid to be measured and allowing to control the temperature of the fluid via the heating element and/or a cooling element.

In a preferred embodiment, the internal fluid path comprises a first connection interface at a first plunger portion and a second connection interface at a second plunger portion spaced apart from to the first plunger portion, wherein the first connection interface is arranged at the inside of the fluid measuring chamber for allowing an inflow of fluid from the fluid measuring chamber to the internal fluid path or an outflow of fluid from the internal fluid path to the fluid measuring chamber, wherein the second connection interface is arranged at the outside of the fluid measuring chamber for allowing an inflow of fluid from the outside of the fluid measuring chamber to the internal fluid path or an outflow of fluid from the internal fluid path to the outside of the fluid measuring chamber.

Thus, fluid may be suitably transported out of the measuring chamber to a remote location without the need of providing further elements such as additional fluid transfer lines, ducts, valves etc. This may allow for a compact and less complex design of the fluid measuring system.

The connection interfaces may include for instance one or more openings for allowing an inflow and outflow of fluid with respect to the internal fluid path. The connection interfaces may be suitably shaped and sized to allow a proper inflow and/or outflow of fluid. The connections interfaces may have the same or different shapes and/or size, and may be suitably adapted for attaching further elements, e.g. valves thereto.

The first plunger portion and the second plunger portion may be portions spaced apart from each other at the plunger. For instance, the first plunger portion may include a distal portion of the plunger, which may be at least partially inserted in the fluid measuring chamber. The second plunger portion may include a proximal portion of the plunger, which may be arranged at least partially outside of the fluid measuring chamber. Thus, a liquid may be transferred from the fluid measuring chamber via the distal and proximal portions of the plunger out of the fluid measuring chamber.

In a preferred embodiment, the internal fluid path is formed as an internal channel, wherein the first connection interface is a first channel opening, and wherein the second connection interface is a second channel opening, wherein the internal channel extends through the plunger essentially parallel to a main extension direction of the plunger between the first channel opening and the second channel opening.

Thus, a simple and robust fluid discharge and/or supply with respect to the fluid measuring chamber via the internal fluid path along the plunger may achieved.

For instance, the plunger may be formed as an elongated cylinder comprising a certain height. Hence, the main extension direction may accordingly correspond to the height of the cylindrically formed plunger. A respective minor extension direction of the plunger may accordingly correspond to one or more directions perpendicular to the height.

Furthermore, an extension essential parallel to the main extension direction may also include one or more portions extending in an inclined direction or even in a direction perpendicular to the main extension direction at one or more portions of the plunger. An internal channel may include a channel that is provided inside the plunger between the first channel opening and the second channel opening. Thus, a proper guidance of the liquid through internal channel of the plunger may be achieved.

In a preferred embodiment, the plunger is movably housed in the fluid measuring chamber, wherein the plunger is longitudinally movable along a main extension direction of the fluid measuring chamber.

Thus, the plunger may accordingly enable creating an overpressure or underpressure in the fluid measuring chamber via a respective movement in a direction into the fluid measuring chamber or out of the fluid measuring chamber. Hence, liquid may be drawn into the fluid measuring chamber or discharged out of the fluid measuring chamber by the respective longitudinal movement of the plunger.

The movement of the plunger may be a reciprocal movement along the main extension direction of the fluid measuring chamber. A motor may operatively connected to the plunger to enable an automatic movement of the plunger. Furthermore, a volume of liquid inside the fluid measuring chamber may be determined and set by controlling the position of the plunger in the fluid measuring chamber. This may be achieved for instance by controlling the motor accordingly.

In a preferred embodiment, the plunger comprises an essentially cylindrical outer surface including a distal front surface at the first plunger portion, wherein the distal front surface faces the inside of the fluid measuring chamber, and a proximal lateral surface at the second plunger portion, wherein the proximal lateral surface faces the outside of the fluid measuring chamber, wherein the first connection interface is arranged at the distal front surface and wherein the second connection interface is arranged at the proximal lateral surface.

Thus, the fluid may be suitably guided out of and away from the fluid measuring chamber along the main extension direction of the plunger, for instance an upward direction, and discharged in a direction perpendicular thereto. The fluid flow may also be vice versa if the fluid is supplied via the internal fluid path to the fluid measuring chamber.

Accordingly, compactness and flexibility in the design of the fluid measuring system may be enhanced. On the one hand, the provision of the first connection interface at the distal front surface of the plunger may allow to bring the first connection interface in the vicinity or contact of fluids, e.g. gases such as air, present in the fluid measuring chamber, that should be discharged. The provision of the second connection interface at the proximal lateral surface on the other hand may allow that other components of the fluid measuring system, for instance fluid discharge or supply lines or valves etc. may be provided at the lateral surface of the plunger.

The fluid measuring chamber and the plunger may have corresponding cylindrical shapes, and the fluid measuring chamber may be suitably sealed by the distal front surface of the plunger. Hence, the plunger may snuggly fit into the fluid measuring chamber and may be moved therein with only low friction.

In a preferred embodiment, the plunger comprises a sealing element arranged between the outer surface of the plunger and an inner surface of the fluid measuring chamber for sealing a fluid volume in the fluid measuring chamber.

Thus, a certain fluid volume in the measuring chamber may be retained. Furthermore, positive or negative pressures in the fluid measuring chamber may be suitably provided by the plunger.

The sealing element may be fixed for instance at an outer surface of the plunger, e.g. via adhesive or mechanical means. The sealing element may be sized and manufactured of suitable flexible materials which may allow creating a fluid tight seal. For instance, the sealing element may be an O-ring arranged and held in a corresponding recess provided at the outer surface of the plunger. However, the present invention is not delimited thereto, and also other suitable sealing elements may be provided.

The fluid volume in the fluid measuring chamber may be for instance between 0.1 ml and 100 ml, preferably between 0.2 ml and 50 ml, more preferably between 0.3 ml and 10 ml, for instance between 0.4 ml and 1 ml.

In a preferred embodiment, a fluid path valve is provided at the second connection interface, wherein the fluid path valve is adapted to control an inflow of fluid from the outside of the fluid measuring chamber to the internal fluid path or to control an outflow of fluid from the internal fluid path to the outside of the fluid measuring chamber.

Thus, a fluid inflow and/or outflow with respect to the fluid measuring chamber may be suitably controlled, which may accordingly enhance a measurement accuracy concerning the liquid contained in the fluid measuring chamber.

Any type of suitable valves may be used, such as for instance a solenoid valve. However, the present invention is not delimited thereto and also other valves such as any kind of manually or electrically controlled valves may be employed. A control of the valve may include increasing or decreasing fluid flow through the internal fluid path, or even blocking the flow completely.

The valve may be configured to allow a flow in one direction, i.e. unidirectional, or in two-directions, i.e. bidirectional.

The internal fluid path valve may be controlled in connection with the movement of the plunger. For instance, if the plunger moves longitudinally in a direction out of the fluid measuring chamber, the fluid path valve may be closed to create an underpressure in the fluid measuring chamber. Thus, fluid to be measured may be drawn into the fluid measuring chamber. Before, during or after the measurement, the fluid path valve may then be opened to allow a discharge of for instance gas, e.g. air, that may have accumulated in the fluid measuring chamber. The plunger may also be moved in a direction into the fluid measuring chamber while the fluid path valve is open to allow a discharge of fluid, e.g. gas or liquid, that has accumulated at the first connection interface. However, this scenario is only exemplarily, and any desired combination of plunger movement and valve condition may be provided.

Furthermore, the internal fluid path valve may be controlled considering the opening or closing condition of one or more fluid supply line valves described herein further below.

In a preferred embodiment, the fluid measuring system further comprises a fluid supply arrangement arranged at a first fluid measuring chamber side for supplying the fluid to the fluid measuring chamber, wherein the plunger is arranged at a second fluid measuring chamber side opposite to the first fluid measuring chamber side, and wherein the plunger is adapted to discharge the fluid from the fluid measuring chamber to the outside of the fluid measuring chamber via the internal fluid path.

Thus, fluid supply and discharge with respect to the fluid measuring chamber may be suitably designed as desired. Furthermore, a predefined fluid flow inside and out of the fluid measuring chamber could be achieved. For instance, the first fluid measuring chamber side may be arranged at a bottom side of the fluid measuring chamber and the second fluid measuring chamber side may be arranged at a top side of the fluid measuring chamber. It will be appreciated that this configuration is merely exemplarily and for instance a vice versa configuration may be provided, if desired.

The plunger may be accordingly adapted to discharge the fluid from the fluid measuring chamber at a top side to the outside of the fluid measuring chamber via the internal fluid path, while the fluid may be supplied via the bottom side. The supply of fluid to the fluid measuring chamber may be performed continuously or is discontinuously. Likewise, the discharge of fluid from the fluid measuring chamber may be performed continuously or is discontinuously. The fluid supply arrangement may also allow sealing the first fluid measuring chamber side, e.g. the bottom side of the fluid measuring chamber. Thus, the fluid volume inside the fluid measuring chamber may be constrained on one side, e.g. the top, by the plunger and may be constrained on the other side, e.g. the bottom, by the fluid supply arrangement.

In a preferred embodiment, the fluid supply arrangement comprises at least one fluid supply line for supplying one or more of a sample fluid, a reagent fluid, a calibration fluid, water or a cleaning fluid to the fluid measuring chamber.

Thus, an individual fluid flow may be provided for each fluid that may be supplied to the fluid measuring chamber. Accordingly, an undesired pre-mixing of the individual fluids may be suitably prevented. Hence, an accuracy in the measurement of the fluid to be measured may be improved.

One or more fluid supply lines may be provided. The sample fluid may include or consists of for instance a water sample that has a certain amount or number of containments, e.g. particles or chemical compounds. Examples of a sample fluid are for instance tap water, industrial water, cooling water and/or wastewater samples. Of course, also more than one sample fluid may be supplied to the fluid measuring chamber, e.g. via a respective additional supply line. The reagent fluid may include or consists of for instance a liquid that may allow a desired reaction with the sample fluid, e.g. a coloration if certain containments are present, e.g. in a certain concentration. Of course, also more than one reagent fluid may be supplied to the fluid measuring chamber, e.g. via a respective additional supply line. The calibration fluid may be a fluid that may allow the calibration of the measurement arrangement of the fluid measurement system, for instance by enabling the employment of a calibration curve. For instance, the calibration fluid may include or consist of a fluid of a certain pH or having a certain defined concentration of a substance or compound to be measured in the sample fluid, e.g. iron, magnesium, calcium etc. Of course, also more than one calibration fluid may be supplied to the fluid measuring chamber, e.g. via a respective additional supply line. The cleaning fluid may include or consist of a fluid may allow cleaning the fluid measuring chamber. For instance, deionized (DI) water or a strong acid may be used to clean the fluid measuring chamber to flush the fluid measuring chamber before or after the measurement. It is noted that the above list is not exhaustive, but the supply line may of course also supply others and different fluids, as desired.

In one example, the sample fluid may be added first to the fluid measuring chamber and then one or more reagent fluids may be added. In another example, the one or more reagent fluids may be added first to the fluid measuring chamber and then a sample fluid may be added. However, a respective supply of the one or more fluid supply lines may be accordingly adapted as desired.

In a preferred embodiment, the fluid supply line comprises a fluid supply line valve, wherein the fluid supply line valve is adapted to control an inflow of fluid from the fluid supply line to the fluid measuring chamber or an outflow of fluid from the fluid measuring chamber.

Thus, control of fluid inflow and/or outflow with respect to the fluid measuring chamber may be enhanced, which may accordingly improve the accuracy in the measurement of the properties of the fluid contained in the fluid measuring chamber.

Any type of suitable valve may be used, such as for instance a solenoid valve. However, the present invention is not delimited thereto and also other valves such as any kind of manually or electrically controlled valves may be employed. A control of the valve may include increasing or decreasing fluid flow through the supply line, or even blocking the flow completely.

The valves may be configured to allow a flow in one direction, i.e. unidirectional, or in two-directions, i.e. bidirectional.

The fluid supply line valve may be controlled in connection with the movement of the plunger. For instance, if the plunger moves longitudinally in a direction out of the fluid measuring chamber, the fluid supply line valve may be opened to allow that the one or more supplied fluids may be drawn into the fluid measuring chamber via the underpressure created in the fluid measuring chamber. The plunger may also be moved in a direction into the fluid measuring chamber while the fluid supply line valve is closed and the fluid path valve is open to allow a discharge of fluid, e.g. gas or liquid, that has accumulated at the first connection interface. However, this scenario is only exemplarily, and any desired combination of plunger movement and valve condition may be provided.

A desired number of fluid supply line valves or even no valves may be provided for each fluid supply line. Furthermore, the fluid supply line valve may be controlled considering the opening or closing condition of the one or more internal fluid path valve described further above.

In a preferred embodiment, the fluid measuring system is an optical fluid measuring system comprising a light emitter for emitting a light beam and a light detector for detecting the light beam, wherein the light emitter and the light detector are arranged in such a way that the light emitted by the light emitter passes through the fluid measuring chamber and is detected by the light detector on an opposite side of the light emitter, thereby forming an optical measurement path.

Thus, optical properties of the fluid contained in the fluid measuring chamber may be suitably detected.

The optical measurement path may extend essentially perpendicular to the main extension direction of the fluid measuring chamber. However, also an extension inclined to the main extension direction of the fluid measuring chamber could be provided.

The light emitter may generate the light used in the measurement process. It could be one of a light-emitting diode, laser diode, or similar. The light emitter may be arranged at one side of the fluid measuring chamber, opposite to the light detector. The light emitter may be configured for emitting a beam of light that passes through the fluid measuring chamber comprising the fluid to be measured for example. The emitted light may be configured for analyzing the fluid to be measured. For chemical analysis, the light emitter may emit light at specific wavelengths according to the absorption or fluorescence properties of the target analytes in the fluid to be measured for example.

The light detector may be configured to detect the transmitted light. For example, the light detector could be a light-sensitive sensor capable of detecting variations in light intensity, wavelength, or polarization caused by interactions with the fluid to be measured.

The light emitter and light detector may be arranged on opposite sides of the fluid measuring chamber, allowing the light beam to pass through the fluid to be measured, for example. The light emitter and light detector may also be arranged on the same side of the fluid measuring chamber, for example by utilizing reflectors or similar. Several light emitters and light detectors may be arranged at different angles around the fluid measuring chamber allowing for multidirectional light emission and detection, enhancing coverage and accuracy in measuring optical properties of the fluid to be measured, for example. The light emitter and light may further be integrated into a single unit, positioned at any suitable location relative to the fluid measuring chamber.

The present invention further relates to a method for measuring a fluid by a fluid measuring system according to the present invention, the method comprising the steps of: providing the plunger at the fluid measuring chamber, supplying the fluid to be measured to the fluid measuring chamber by the fluid supply line or the internal fluid path, measuring the fluid by the measurement arrangement, and discharging the fluid from the fluid measuring chamber by the other one of the fluid supply line or the internal fluid path.

It is noted that the above explanations regarding certain elements or advantages described with respect to the fluid measuring system accordingly apply to the corresponding elements noted in connection with the method for measuring a fluid by the fluid measuring system described herein. Thus, an improved method may be provided, which may allow to supply or discharge a fluid via the internal fluid path to an outside of the fluid measuring chamber. Thus, a precise adjustment of the fluid and an easy exchange of the fluid may be achieved.

The provision of the plunger at the fluid measuring chamber may include a provision of the plunger inside the fluid measuring chamber, but may also include a provision immediately adjacent to the fluid measuring chamber, such that at least one surface of the plunger seals the volume inside the fluid measuring chamber to receive and hold a respective fluid to be measured.

In a preferred embodiment, the step of supplying the fluid to be measured to the fluid measuring chamber comprises the step of longitudinally moving the plunger in a direction out of the fluid measuring chamber along the main extension direction of the fluid measuring chamber such that fluid is drawn into the fluid measuring chamber via the fluid supply line, and the step of discharging the fluid from the fluid measuring chamber comprises the step of longitudinally moving the plunger in a direction in a direction into the fluid measuring chamber along the main extension direction of the fluid measuring chamber such that the fluid pushed out of the fluid measuring chamber via the internal fluid path.

Thus, an overpressure or underpressure in the fluid measuring chamber may be created by the plunger. Hence, liquid may be drawn into the fluid measuring chamber or discharged out of the fluid measuring chamber by the respective longitudinal movement of the plunger. The movement of the plunger may be a reciprocal movement along the main extension direction of the fluid measuring chamber. A motor may be operatively connected to the plunger to enable an automatic movement of the plunger. Hence, a volume of liquid inside the fluid measuring chamber may be determined and set by controlling the position of the plunger in the fluid measuring chamber. This may be done for instance by controlling the motor accordingly.

A discharge may include a full discharge or a partial discharge of the fluid. In other words, the fluid measuring chamber may be emptied up to a desired degree.

In a preferred embodiment, one or more of the steps of supplying the fluid to the fluid measuring chamber and/or discharging the fluid from the fluid measuring chamber are performed while maintaining a fixed position of the plunger.

Accordingly, a fluid exchange may be achieved by the respective fluid supply and discharge provided for instance via the internal fluid path(s) and/or the fluid supply line(s). Thus, wear of the plunger and any parts associated therewith, for instance seals provided to seal the fluid in the fluid measuring chamber may be suitably reduced. This may prolong the life cycle of the respective parts, which may accordingly require a less frequent exchange of said parts. Furthermore, by enabling fluid to flow into and through the fluid measuring chamber without moving the plunger, a failure mode associated with undue underpressure or overpressure, which may occur when for instance valves may malfunction, may be mitigated.

In a preferred embodiment, the step of discharging the fluid from the fluid measuring chamber by the other one of the fluid supply line or the internal fluid path includes a discharge one or more of a gas and/or a liquid.

Thus, the method may be flexibly adapted to the discharge of a gas, liquid or a mixture thereof.

The fluid connection may accordingly allow a discharge of a gas and/or a liquid from the fluid measuring chamber. For instance, if the plunger is inserted at a top side of the fluid measuring chamber, and the internal fluid path extends from a bottom side of the plunger to a top side of the plunger, gas and/or liquid may be allowed to flow through the plunger towards the top side of the plunger and may be accordingly discharged at the top side of the plunger.

For instance, if the fluid to be measured contains gas, e.g. air, which accumulates at the top side of the fluid measuring chamber, the gas could be accordingly discharged from the chamber. Accordingly, a partial or even full removal of the gas from the fluid measuring chamber may be achieved. Hence, compressible elements of the fluid contained in the fluid measuring chamber may be suitably removed. This may accordingly enhance the provision of a distinct pressure in the fluid measuring chamber.

Further features, examples, and advantages will become apparent from the following detailed description of preferred embodiments and the accompanying figures.

### 4. BRIEF DESCRIPTION OF THE DRAWINGS

For a better understanding of the present invention, and to illustrate its practicality, figures are provided in the following and reference is made thereto. It should be understood that the figures represent only exemplary embodiments and thus in no way limit the scope of the claimed invention. Identical or like-acting elements are indicated throughout by the same or like reference signs. In particular, as used herein, a hyphenated form of a reference sign refers to a specific embodiment of an element and the unhyphenated form of the reference numeral refers to the collective element. For example, a device "41-1" refers to an instance of a device class that can be collectively referred to as device "41" and each of which can be generically referred to as device "41". Any reference signs in the claims should not be construed as limiting the scope of the claims.

In the accompanying drawings,
- Figure 1: schematically illustrates a fluid measuring system according to an embodiment of the present invention, and
- Figure 2: schematically illustrates an embodiment of a method of the present invention for measuring a fluid by a fluid measuring system.

### 5. DESCRIPTION OF EMBODIMENTS

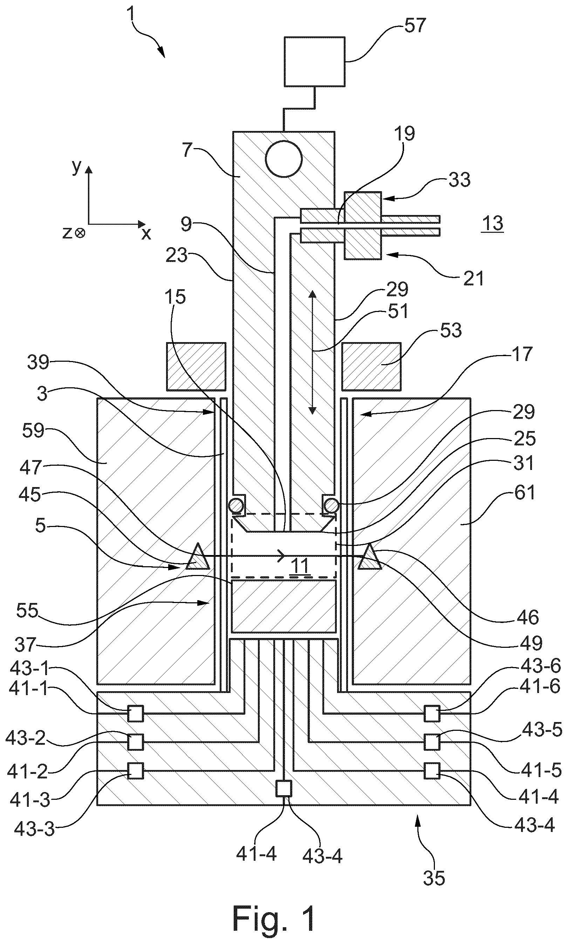

Figure 1 depicts a fluid measuring system 1. The fluid measuring system 1 comprises a fluid measuring chamber 3 for receiving a fluid to be measured and a measurement arrangement 5 for measuring the received fluid. The measuring system 1 further comprises a plunger 7 being at least partially arranged in the fluid measuring chamber 3. The plunger 7 comprises an internal fluid path 9 extending therethrough, wherein the internal fluid path 9 is adapted to provide a fluid connection between an inside 11 of the fluid measuring chamber 3 and an outside 13 of the fluid measuring chamber 3.

In the depicted embodiment, the internal fluid path 9 comprises a first connection interface 15 at a first plunger portion 17 and a second connection interface 19 at a second plunger portion 21 spaced apart from to the first plunger portion 17. Herein, the first connection interface 15 is arranged at the inside 11 of the fluid measuring chamber 3 for allowing an inflow of fluid from the fluid measuring chamber 3 to the internal fluid path 9 and/or an outflow of fluid from the internal fluid path 9 to the fluid measuring chamber 3. The second connection interface 19 is arranged at the outside 13 of the fluid measuring chamber 3 for allowing an inflow of fluid from the outside 13 of the fluid measuring chamber 3 to the internal fluid path 9 and/or an outflow of fluid from the internal fluid path 9 to the outside 13 of the fluid measuring chamber 3.

In the depicted embodiment, the internal fluid path 9 is formed as an internal channel, wherein the first connection interface 15 is a first channel opening, and wherein the second connection interface 19 is a second channel opening. As shown, the internal channel extends through the plunger 7 essentially parallel to a main extension direction of the plunger 7, which is the y-direction in the presented case, between the first channel opening and the second channel opening. The main extension direction corresponds to the height of the cylindrically formed plunger 7 in the y-direction. A respective minor extension direction of the plunger 7 is, in the presented, case accordingly the x-direction perpendicular to the y-direction, and the z- direction, which is perpendicular to both, the x-direction and the y-direction.

The plunger 7 is movably housed in the fluid measuring chamber 3. As depicted, the plunger 7 is longitudinally movable along a main extension direction of the fluid measuring chamber 3, which is, in the presented case, the y-direction. The main extension direction corresponds to the height of the cylindrically formed measuring chamber 3. A respective minor extension direction of the chamber 3 is, in the presented case, accordingly the x-direction perpendicular to the y-direction, and the z- direction, which is perpendicular to both, the x-direction and the y-direction. As is indicated by the double arrow 51, the movement of the plunger 7 could be a reciprocal movement along the y-direction, which is here towards and against the y-direction. A motor 57 is operatively connected to the plunger 7 to enable an automatic movement of the plunger 7.

The plunger 7 comprises an essentially cylindrical outer surface 23 including a distal front surface 25 at the first plunger portion 17, wherein the distal front surface 25 faces the inside 11 of the fluid measuring chamber 3. Further, the plunger 7 comprises a proximal lateral surface 27 at the second plunger portion 21, wherein the proximal lateral surface 27 faces the outside 13 of the fluid measuring chamber 3, wherein the first connection interface 15 is arranged at the distal front surface 25 and wherein the second connection interface 19 is arranged at the proximal lateral surface 27.

Furthermore, the plunger 7 comprises a sealing element 29 arranged between the outer surface 23 of the plunger 7 and an inner surface of the fluid measuring chamber 3 for sealing a fluid volume 31 in the fluid measuring chamber 3. In the presented case, the sealing element 29 is an O-ring being arranged and held in a respective recess provided at the outer surface 23 of the plunger 7.

A fluid path valve 33 is provided at the second connection interface 19, wherein the fluid path valve 33 is adapted to control an inflow of fluid from the outside 13 of the fluid measuring chamber 3 to the internal fluid path 9. Likewise, the fluid path valve 33 is adapted to control an outflow of fluid from the internal fluid path 9 to the outside 13 of the fluid measuring chamber 3. Thus, a fluid inflow and/or outflow to the fluid measuring chamber 3 could be accordingly controlled. Any type of suitable valve may be used, such as for instance a solenoid valve or a manual valve.

The fluid measuring system 1 further comprises a fluid supply arrangement 35 arranged at a first fluid measuring chamber side 37 for supplying the fluid to the fluid measuring chamber 3. In the depicted embodiment, the first fluid measuring chamber side 37 is arranged at a bottom side of the fluid measuring chamber 3. The plunger 7 is arranged at a second fluid measuring chamber side 39 opposite to the first fluid measuring chamber side 37. In the depicted embodiment, the second fluid measuring chamber side 39 is arranged at a top side of the fluid measuring chamber 3. The plunger 7 is adapted to discharge the fluid from the fluid measuring chamber 3 to the outside 13 of the fluid measuring chamber 3 via the internal fluid path 9. The fluid supply arrangement 35 also seals the first fluid measuring chamber side 37, i.e. the bottom side of the fluid measuring chamber 3 in the depicted embodiment.

The fluid supply arrangement 35 comprises a plurality of fluid supply lines 41 for supplying one or more of a sample fluid, a reagent fluid, a calibration fluid, water or a cleaning fluid to the fluid measuring chamber 3. In the depicted embodiment, supply line 41-1 is a cleaning fluid supply line adapted to supply cleaning fluid. Further, supply line 41-2 is a deionized (DI) water supply line adapted to supply DI water. Further, supply line 41-3 is a 1 calibration liquid supply line adapted to supply calibration liquid. Further, supply line 41-4 is a 1 sample liquid supply line adapted to supply sample liquid. Further, supply lines 41-4 to 41-6 are individual reagents supply lines adapted to supply respective different reagents.

Further, each fluid supply line 41 comprises a fluid supply line valve 43, wherein the fluid supply line valve 43 is adapted to control an inflow of fluid from the fluid supply line 41 to the fluid measuring chamber 3 and/or an outflow of fluid from the fluid measuring chamber 3. It will be appreciated that, in other embodiments, more or less fluid supply lines 41 and more or less, or even no valves associated to the fluid supply lines 41 could be provided. Any type of suitable valves may be used, such as for instance solenoid valves or manual valves.

In the depicted embodiment, the fluid measuring system 1 is an optical fluid measuring system comprising a light emitter 45 for emitting a light beam 47 and a light detector 49 for detecting the light beam 47. As is shown, the light emitter 45 and the light detector 49 are arranged in such a way that the light emitted by the light emitter 45 passes through the fluid measuring chamber 3 and is detected by the light detector 46 on an opposite side of the light emitter 45, thereby forming an optical measurement path 49. In the depicted embodiment, the optical measurement path 49 extends essentially perpendicular to the main extension direction of the fluid measuring chamber 3, i.e. here in the x-direction.

The fluid measuring system 1 further comprises a collar 53, arranged at the top side of the fluid measuring chamber 3, which is adapted to hold and guide the plunger 7. Furthermore, a stir element 55 is provided at the bottom side of the fluid measuring chamber 3, which may be accordingly driven to enable a stirring or mixing of the fluid contained in the fluid measuring chamber 3. In other configurations, a stirring may be additionally or alternatively achieved by aspirating a gas, for instance air, which accordingly moves from the bottom fluid supply towards the top fluid discharge.

The fluid measuring system 1 further comprises a temperature control element 61, which may include for instance a heating element and/or a cooling element for controlling of the temperature of the fluid to be measured. The fluid measuring system 1 accordingly comprises a temperature sensor 59 for measuring and controlling a temperature of the fluid to be measured.

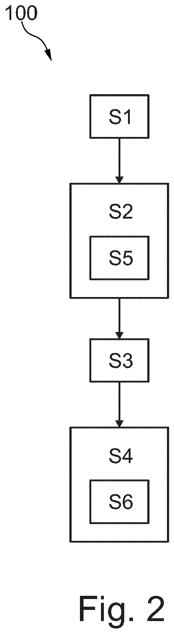

Figure 2 depicts a flow diagram of an embodiment of a method of the present invention for measuring a fluid by the fluid measuring system described herein. The method 100 comprises the step S1 of providing the plunger 7 at the fluid measuring chamber 3. The method 100 further comprises the step S2 of supplying the fluid to be measured to the fluid measuring chamber 3 by the fluid supply line 41 or the internal fluid path 9. The method 100 further comprises the step S3 of measuring the fluid by the measurement arrangement 5. The method 100 further comprises the step S4 of discharging the fluid from the fluid measuring chamber 3 by the other one of the fluid supply line 41 or the internal fluid path 9.

In the depicted embodiment, the step of supplying S2 the fluid to be measured to the fluid measuring chamber 3 comprises the step S5 of longitudinally moving 51 the plunger 7 in a direction out of the fluid measuring chamber 3 along the main extension direction of the fluid measuring chamber 3 such that fluid is drawn into the fluid measuring chamber 3 via the fluid supply line 41. Further, the step of discharging S4 the fluid from the fluid measuring chamber 3 comprises the step S6 of longitudinally moving 51 the plunger 7 in a direction into the fluid measuring chamber 3 along the main extension direction of the fluid measuring chamber 3 such that the fluid pushed out of the fluid measuring chamber 3 via the internal fluid path 9.

In the depicted embodiment, one or more of the steps S2 of supplying the fluid to the fluid measuring chamber 3 and/or S4 of discharging the fluid from the fluid measuring chamber 3 could be performed while maintaining a fixed position of the plunger 7. Furthermore, the step S4 of discharging the fluid from the fluid measuring chamber 3 by the other one of the fluid supply line 41 or the internal fluid path 9 could include a discharge one or more of a gas and/or a liquid.

It will be understood that the method according to the present invention is not limited to the above noted order of method steps. Quite to the contrary, the method steps may be also provided in a different order and one or more of the above noted method steps may be removed, or further method steps may be added, as desired.

Other variations to the disclosed embodiments can be understood and effected by those skilled in the art in practicing the claimed disclosure, from the study of the drawings, the disclosure, and the appended claims. In the claims the word "comprising" or "including" does not exclude other elements or steps and the indefinite article "a" or "an" does not exclude a plurality. The mere fact that certain measures are recited in mutually different dependent claims does not indicate that a combination of these measures cannot be used to advantage.

### LIST OF REFERENCE SIGNS

- 1: fluid measuring system
- 3: fluid measuring chamber
- 5: measurement arrangement
- 7: plunger
- 9: internal fluid path
- 11: inside of the fluid measuring chamber
- 13: outside of the fluid measuring chamber
- 15: first connection interface
- 17: first plunger portion
- 19: second connection interface
- 21: second plunger portion
- 23: outer plunger surface
- 25: distal front surface
- 27: proximal lateral surface
- 29: sealing element
- 31: fluid volume
- 33: fluid path valve
- 35: fluid supply arrangement
- 37: first fluid measuring chamber side
- 39: second fluid measuring chamber side
- 41: fluid supply line
- 43: fluid supply line valve
- 45: light emitter
- 46: light detector
- 47: light beam
- 49: optical measurement path
- 51: plunger movement
- 53: collar
- 55: stir element
- 57: motor
- 59: temperature sensor
- 61: temperature control element
- 100: method
- S1-S6: method steps

## Claims

1. A fluid measuring system (1) comprising,
a fluid measuring chamber (3) for receiving a fluid to be measured,
a measurement arrangement (5) for measuring the received fluid,
a plunger (7) being at least partially arranged in the fluid measuring chamber (3),
wherein the plunger (7) comprises an internal fluid path (9) extending therethrough,
wherein the internal fluid path (9) is adapted to provide a fluid connection between an inside (11) of the fluid measuring chamber (3) and an outside (13) of the fluid measuring chamber (3).

2. The fluid measuring system (1) according to the preceding claim,
wherein the internal fluid path (9) comprises a first connection interface (15) at a first plunger portion (17) and a second connection interface (19) at a second plunger portion (21) spaced apart from to the first plunger portion (17),
wherein the first connection interface (15) is arranged at the inside (11) of the fluid measuring chamber (3) for allowing an inflow of fluid from the fluid measuring chamber (3) to the internal fluid path (9) or an outflow of fluid from the internal fluid path (9) to the fluid measuring chamber (3), and
wherein the second connection interface (19) is arranged at the outside (13) of the fluid measuring chamber (3) for allowing an inflow of fluid from the outside (13) of the fluid measuring chamber (3) to the internal fluid path (9) or an outflow of fluid from the internal fluid path (9) to the outside (13) of the fluid measuring chamber (3).

3. The fluid measuring system (1) according to one of the preceding claims,
wherein the internal fluid path (9) is formed as an internal channel,
wherein the first connection interface (15) is a first channel opening, and wherein the second connection interface (19) is a second channel opening,
wherein the internal channel extends through the plunger (7) essentially parallel to a main extension direction of the plunger (7) between the first channel opening and the second channel opening.

4. The fluid measuring system (1) according to one of the preceding claims,
wherein the plunger (7) is movably housed in the fluid measuring chamber (3),
wherein the plunger (7) is longitudinally movable along a main extension direction of the fluid measuring chamber (3).

5. The fluid measuring system (1) according to one of the preceding claims 2 to 4,
wherein the plunger (7) comprises an essentially cylindrical outer surface (23) including a distal front surface (25) at the first plunger portion (17), wherein the distal front surface (25) faces the inside (11) of the fluid measuring chamber (3), and
a proximal lateral surface (27) at the second plunger portion (21), wherein the proximal lateral surface (27) faces the outside (13) of the fluid measuring chamber (3),
wherein the first connection interface (15) is arranged at the distal front surface (25) and wherein the second connection interface (19) is arranged at the proximal lateral surface (27).

6. The fluid measuring system (1) according to one of the preceding claims,
wherein the plunger (7) comprises a sealing element (29) arranged between the outer surface (23) of the plunger (7) and an inner surface of the fluid measuring chamber (3) for sealing a fluid volume (31) in the fluid measuring chamber (3).

7. The fluid measuring system (1) according to one of the preceding claims 2 to 6,
wherein a fluid path valve (33) is provided at the second connection interface (19), wherein the fluid path valve (33) is adapted to control an inflow of fluid from the outside (13) of the fluid measuring chamber (3) to the internal fluid path (9) or to control an outflow of fluid from the internal fluid path (9) to the outside (13) of the fluid measuring chamber (3).

8. The fluid measuring system (1) according to one of the preceding claims,
further comprising a fluid supply arrangement (35) arranged at a first fluid measuring chamber side (37) for supplying the fluid to the fluid measuring chamber (3),
wherein the plunger (7) is arranged at a second fluid measuring chamber side (39) opposite to the first fluid measuring chamber side (37), and
wherein the plunger (7) is adapted to discharge the fluid from the fluid measuring chamber (3) to the outside (13) of the fluid measuring chamber (3) via the internal fluid path (9).

9. The fluid measuring system (1) according to the preceding claim,
wherein the fluid supply arrangement (35) comprises at least one fluid supply line (41) for supplying one or more of a sample fluid, a reagent fluid, a calibration fluid, water or a cleaning fluid to the fluid measuring chamber (3).

10. The fluid measuring system (1) according to the preceding claim,
wherein the fluid supply line (41) comprises a fluid supply line valve (43), wherein the fluid supply line valve (43) is adapted to control an inflow of fluid from the fluid supply line (41) to the fluid measuring chamber (3) or an outflow of fluid from the fluid measuring chamber (3).

11. The fluid measuring system (1) according to one of the preceding claims,
wherein the fluid measuring system (1) is an optical fluid measuring system comprising a light emitter (45) for emitting a light beam (47) and a light detector (49) for detecting the light beam (47),
wherein the light emitter (45) and the light detector (49) are arranged in such a way that the light emitted by the light emitter (45) passes through the fluid measuring chamber (3) and is detected by the light detector (46) on an opposite side of the light emitter (45), thereby forming an optical measurement path (49).

12. A method (100) for measuring a fluid by a fluid measuring system (1) according to one of the preceding claims 1 to 11, the method (100) comprising the steps of:
providing (S1) the plunger (7) at the fluid measuring chamber (3),
supplying (S2) the fluid to be measured to the fluid measuring chamber (3) by the fluid supply line (41) or the internal fluid path (9),
measuring (S3) the fluid by the measurement arrangement (5), and
discharging (S4) the fluid from the fluid measuring chamber (3) by the other one of the fluid supply line or the internal fluid path (9).

13. The method (100) according to the preceding claim,
wherein the step of supplying (S2) the fluid to be measured to the fluid measuring chamber (3) comprises the step (S5) of longitudinally moving (51) the plunger (7) in a direction out of the fluid measuring chamber (3) along the main extension direction of the fluid measuring chamber (3) such that fluid is drawn into the fluid measuring chamber (3) via the fluid supply line (41), and
wherein the step of discharging (S4) the fluid from the fluid measuring chamber (3) comprises the step (S6) of longitudinally moving (51) the plunger (7) in a direction into the fluid measuring chamber (3) along the main extension direction of the fluid measuring chamber (3) such that the fluid pushed out of the fluid measuring chamber (3) via the internal fluid path (9).

14. The method (100) according to claim 12,
wherein one or more of the steps of supplying (S2) the fluid to the fluid measuring chamber (3) and/or discharging (S4) the fluid from the fluid measuring chamber (3) are performed while maintaining a fixed position of the plunger (7).

15. The method (100) according to one of the preceding claims,
wherein the step (S4) of discharging the fluid from the fluid measuring chamber (3) by the other one of the fluid supply line (41) or the internal fluid path (9) includes a discharge one or more of a gas and/or a liquid.
